# EUROPÄISCHE PATENTANMELDUNG

(11) **EP 0 839 629 A1**
(43) Veröffentlichungstag der Anmeldung: **06.05.1998**
(21) Anmeldenummer: 97114279.9
(22) Anmeldetag: 19.08.1997
(51) Int. Cl.: B29C 45/16, B29C 45/27

(54) **Verfahren zum Spritzgiessen von dreischichtigen Spritzlingen und Vorrichtung für die Durchfürung des Verfahrens**

(30) Priorität: 02.10.1996 DE 19640662
(71) Anmelder: Fried. Krupp AG Hoesch-Krupp, 45143 Essen (DE)
(72) Erfinder: Blank, Michael, Dipl.-Ing., 42113 Wuppertal (DE); Schramm, Klaus, Dr. Ing., 45131 Essen (DE)

(57) **Zusammenfassung**

Bei einem Verfahren zum Spritzgießen von dreischichtigen Spritzlingen mit einer inneren und einer äußeren Schicht aus einem Werkstoff "A", und einer mittleren Schicht aus einem Werkstoff "B", der als Gasbarriere für O₂, CO₂ und SO₂ sowie Wasserdampf (H₂O) geeignet ist, wird eine Vorrichtung verwendet, die mindestens ein Formwerkzeug mit mehreren Formkavitäten und mindestens eine mit Spritzgießdüsen versehene Heißläuferplatte aufweist. Hierbei erfolgt
- die Zuführung des Werkstoffs "A" in die Formkavitäten (1.1) des Formwerkzeugs (1) über einen Ringspalt zwischen dem Düseninnenkörper (2.1) und dem Düsenaußenkörper (2.2) jeder Spritzgießdüse (2) und die Zuführung des Werkstoffs "B" in die Formkavitäten (1.1) über eine zentral in dem Düseninnenkörper (2.1) angeordnete Hohlnadel (3) mit einem integrierten nicht drehbaren Hohlnadelkolben (4),
- und die Befüllung des in der Hohlnadel (3) gebildeten Hohlnadelspeichers (3.1) in vorgefahrener Stellung durch eine in der Hohlnadel (3) vorgesehene, senkrecht zu der Hohlnadel (3) verlaufende Durchgangsöffnung (6), während in zurückgefahrener Stellung der Hohlnadel (3) die Durchgangsöffnung (6) abgesperrt ist.

## Beschreibung

Die Erfindung betrifft ein Verfahren zum Spritzgießen von dreischichtigen Spritzlingen, insbesondere von Flaschenvorformlingen, mit einer inneren und einer äußeren Schicht aus einem Werkstoff "A", beispielsweise PET (Polyethylenterephthalat) und einer mittleren Schicht aus einem Werkstoff "B", der als Gasbarriere für O₂, CO₂ und SO₂ sowie Wasserdampf (H₂O) geeignet ist, beispielsweise EVAL (Ethylene Vinyl Alcohol Copolymer), mittels einer Vorrichtung, die mindestens ein Formwerkzeug mit mehreren Formkavitäten und mindestens eine mit Spritzgießdüsen versehene Heißläuferplatte aufweist, wobei die Anzahl der Spritzgießdüsen der Anzahl der Formkavitäten entspricht, und wobei die Werkstoffe "A" und "B" über separate Heißläufersysteme den Formkavitäten zugeführt werden. Die Erfindung betrifft ferner eine Vorrichtung für die Durchführung des Verfahrens.

Die Erfindung ist weder auf Flaschenvorformlinge noch auf den Werkstoff PET beschränkt. Sie ist auch anwendbar beim Spritzgießen von Spritzlingen für beliebige andere Zwecke aus beliebigen anderen Kunststoffen bzw. Kunststoffkombinationen. Beispielsweise kann die Erfindung auch beim Spritzgießen von Mehrschichtvorformlingen aus der Werkstoffkombination PET und PEN (Polyethylennaphtalat) Verwendung finden. Polyethylennaphtalat gehört - wie PET - zu der Werkstoffgruppe der Polyester, weist jedoch gegenüber PET weitaus bessere thermische Beanspruchungseigenschaften, allgemeine mechanische Eigenschaften sowie Barriereeigenschaften auf. Dieser noch verhältnismäßig neue Werkstoff ist u. a. bereits als Verpackungsmaterial in der Lebensmittelbranche von den jeweiligen staatlichen Institutionen freigegeben und aufgrund seiner hervorragenden Eigenschaften geeignet, schon bei verhältnismäßig kleinen Anteilen am Gewicht des Vorformlings die Flaschenqualität deutlich zu erhöhen. Flaschen aus PET/PEN eignen sich beispielsweise besonders für die Heißabfüllung von Fruchtsäften sowie für den Einsatz in heißen Ländern.

Bei den genannten Vorformlingen bildet die mittlere Schicht einen Kern und die innere und die äußere Schicht bilden eine geschlossene Haut. Hierbei kann die innere Schicht eine Barriereschicht bilden. Barriereschichten, insbesondere Gasbarrieren für 0₂, CO₂ und SO₂ sowie Wasserdampf (H₂O) sind bei Spritzlingen der vorgenannten Art zur Permeationsminderung sehr wichtig.

Bei den bekannten Verfahren der eingangs genannten Art ergibt sich für die innere Schicht eine verhältnismäßig große Wanddicke. Dies führt zu einer erheblichen Verteuerung der Spritzlinge, weil die zur Bildung einer Barriereschicht geeigneten Werkstoffe wesentlich teurer sind als der für die äußere Schicht zu verwendende Werkstoff. Ein weiterer Nachteil der bekannten Verfahren besteht darin, daß die Materialverteilung zur Erzeugung der Barriereschichten bei Multikavitätenwerkzeugen (Werkzeuge mit 32 bzw. 48 Kavitäten) - gesehen über alle Kavitäten - große Ungleichmäßiglkeitem aufweist.

Da der als Barriereschicht in Betracht kommenden Werkstoff "B" nicht einer so hohen Temperatur ausgesetzt werden darf, wie der Werkstoff "A" der äußeren Schicht, müssen die Werkstoffe "A" und "B" über separate Heißläufersyteme den Kavitäten zugeführt werden. Auch hierbei treten erhebliche Schwierigkeiten auf. So sind bei einer bekannten Spritzvorrichtung zur gleichzeitigen Einspritzung für Spritzartikel mit mehrschichtigen Wänden zwar eine separate Quelle und separate Kanäle vorgesehen (EP 0 246 512 B1); es verbleibt aber nach jedem Zyklus immer eine erhebliche Menge des Werkstoffs "B" in der Düse und in den unmittelbar daran angrenzenden Kanälen, so daß der schließlich in die Kavitäten einzuspritzende Werkstoff "B" über einen erheblichen Zeitraum einer zu hohen Temperatur ausgesetzt ist.

Der Erfindung liegt die Aufgabe zugrunde, die vorgenannten Schwierigkeiten zu vermeiden und das eingangs erwähnte Verfahren so auszugestalten, daß sich eine erhebliche Verminderung der Wanddicke der inneren Schicht der Spritzlinge und damit eine wesentlich preiswertere Herstellung der Spritzlinge ergibt, und daß eine hohe Gleichmäßigkeit und Reproduzierbarkeit der Wanddicken der inneren Schicht über alle Kavitäten erzielt wird.

Die gestellte Aufgabe wird dadurch gelöst, daß bei dem eingangs genannten Verfahren
- die Zuführung des Werkstoffs "A" in die Formkavitäten des Formwerkzeugs über einen Ringspalt zwischen dem Düseninnenkörper und dem Düsenaußenkörper jeder Spritzgießdüse und die Zuführung des Werkstoffs "B" in die Formkavitäten über eine zentral in dem Düseninnenkörper angeordnete Hohlnadel mit einem integrierten nicht drehbaren Hohlnadelkolben erfolgt
- und die Befüllung des in der Hohlnadel gebildeten Hohlnadelspeichers in vorgefahrener Stellung - der Schließstellung - durch eine in der Hohlnadel vorgesehene, senkrecht zu der Hohlnadel verlaufende Durchgangsöffnung erfolgt, während in zurückgefahrener Stellung der Hohlnadel die Durchgangsöffnung abgesperrt ist.

Durch entsprechende Regelung der Füllung bzw. des Hubes der Hohlnadelkolben kann die Menge an Werkstoff "B" - und damit die Wanddicke der mittleren Schicht - über alle Kavitäten des Spritzgießwerkzeugs sehr genau bestimmt und von Zyklus zu Zyklus reproduziert werden. Außerdem erhält durch das erfindungsgemäße Verfahren die innere Schicht - die Barriereschicht - eine sehr gleichmäßige Wandstärke.

Dadurch, daß die Hohlnadelspeicher bei jedem Zyklus völlig entleert werden, ist der Werkstoff "B" lediglich während der Entformung und des Spritzvorgangs - also während eines außerordentlich geringen Zeitraums - einer höheren Temperatur ausgesetzt.

Eine vorteilhafte Ausführungsform des erfindungsgemäßen Verfahrens weist die Verfahrensschritte auf,
- daß - bei zurückgefahrener Hohlnadel und dadurch verschlossener Durchgangsöffnung und bei zurückgefahrenem Hohlnadelkolben - durch den Ringspalt zwischen dem Düseninnenkörper und dem Düsenaußenkörper hindurch die Zuführung eines eine Vorlage bildenden Teils des Werkstoffs "A" erfolgt,
- daß danach - bei unveränderter Stellung der Hohlnadel und bei Vorfahren des Hohlnadelkolbens - eine weitere Zuführung des Werkstoffs "A" und eine gleichzeitige Zuführung des Werkstoffs "B" erfolgt,
- daß sodann - bei nunmehr in vorgefahrener Stellung befindlichem Hohlnadelkolben und somit von Werkstoff "B" entleertem Hohlnadelspeicher - zunächst ein weiteres Einspritzen des Werkstoffs "A" und
- anschließend ein Nachdrücken des Werkstoffs "A" mit einer nachfolgenden Dekomprimierung des Werkstoffs "A" durchgeführt wird,
- daß schließlich die Hohlnadel bis zur Berührung mit dem Düsenaußenkörper vorgefahren, der Anguß versiegelt und der Hohlnadelkolben zurückgefahren wird, wobei ein Füllen des Hohlnadelspeichers mit Werkstoff "B" erfolgt
- und daß zuletzt eine Dekomprimierung des Werkstoffs "B" und anschließend die Entformung der Spritzlinge durchgeführt wird.

Bei dem so ausgestalteten erfindungsgemäßen Verfahren können die bei bekannten Verfahren üblichen Schwierigkeiten nicht auftreten.

Eine andere vorteilhafte Ausführungsform des erfindungsgemäßen Verfahrens weist die Verfahrensschritte auf,
- daß - bei zurückgefahrener Hohlnadel und dadurch verschlossener Durchgangsöffnung und bei zurückgefahrenem Hohlnadelkolben - durch den Ringspalt zwischen dem Düseninnenkörper und dem Düsenaußenkörper hindurch die Zuführung eines eine Vorlage bildenden Teils des Werkstoffs "A" erfolgt,
- daß danach - bei unveränderter Stellung der Hohlnadel und bei Vorfahren des Hohlnadelkolbens - die Zuführung eines eine Vorlage bildenden Teils des Werkstoffs "B" aus dem Hohlnadelspeicher erfolgt,
- daß sodann - bei weiterhin unveränderter Stellung der Hohlnadel und weiterem Vorfahren des Hohlnadelkolbens bis zur Berührung mit dem Austrittstrichter der Hohlnadel - eine gleichzeitige Zuführung der Werkstoffe "A" und "B" erfolgt,
- daß anschließend ein Nachdrücken des Werkstoffs "A" mit einer nachfolgenden Dekomprimierung des Werkstoffs "A" durchgeführt wird,
- daß schließlich die Hohlnadel bis zur Berührung mit dem Düsenaußenkörper vorgefahren, der Anguß versiegelt und der Hohlnadelkolben zurückgefahren wird, wobei ein Füllen des Hohlnadelspeichers mit Werkstoff "B" erfolgt,
- und daß zuletzt eine Dekomprimierung des Werkstoffs "B" und anschließend die Entformung der Spritzlinge durchgeführt wird.

Auch bei dieser Ausführungsform des erfindungsgemäßen Verfahrens treten die Schwierigkeiten der bekannten Verfahren nicht auf.

Bei den vorstehend beschriebenen Ausführungsformen des erfindungsgemäßen Verfahrens sind der Hub der Hohlnadeln und die Stellung der Hohlnadelkolben in deren vorgefahrener Entleerungsstellung so aufeinander abgestimmt, daß nach dem Vorfahren der Hohlnadeln in Versiegelungsstellung der zylindrische Eingang zum Speicherraum noch verschlossen bleibt.

Eine vorteilhafte Weiterbildung des erfindungsgemäßen Verfahrens besteht darin, daß die Hohlnadel und der Hohlnadelkolben nach Entleerung des Werkstoffs "B" gleichzeitig synchron in Versiegelungsstellung vorgefahren werden, so daß restlicher Werkstoff "A" in die Kavitäten verdrängt wird. In diesem Falle reicht die Längnut, die eine Verbindung zwischen der in der Hohlnadel vorgesehenen Durchgangsöffnung und dem Hohlnadelspeicher bildet und die sich bei den vorgenannten Ausführungsformen des erfindungsgemäßen Verfahrens bis zu der Durchgangsöffnung erstreckt, etwas über diese Durchgangsöffnung hinaus.

Die Merkmale weiterer Ausgestaltungen des erfindungsgemäßen Verfahrens sind in den Unteransprüchen 4 bis 8 genannt.

Die Vorrichtung für die Durchführung des Verfahrens, die mindestens ein Formwerkzeug mit mehreren Formkavitäten und mindestens eine mit Spritzgießdüsen versehene Heißläuferplatte aufweist, wobei die Anzahl der Spritzgießdüsen der Anzahl der Formkavitäten entspricht und wobei in jeder Spritzgießdüse eine Verschlußnadel verschiebbar angeordnet ist, löst die gestellte Aufgabe dadurch,
- daß die Verschlußnadel als Hohlnadel mit darin verschiebbar angeordnetem, nicht drehbarem Hohlnadelkolben ausgebildet ist, wobei der Innenraum der Hohlnadel einen Speicher (Hohlnadelspeicher) für den Werkstoff "B" bildet,
- daß die Hohlnadel im Bereich des Heißläufersystems für den Werkstoff "B" mit einer senkrecht zu der Hohlnadel verlaufenden Durchgangsöffnung und der Hohlnadelkolben mit einer sich bis zu der Durchgangsöffnung erstreckenden Längsnut versehen ist, wobei die Durchgangsöffnung und die Längsnut einen Durchfluß des Werkstoffs "B" von einer Zuführungsleitung in den Hohlnadelspeicher ermöglichen,
- und daß die Durchgangsöffnung derart angeordnet ist, daß ein Befüllen der Hohlnadel nur in vorgefahrener Stellung - der Schließstellung der Hohlnadel - erfolgen kann und daß bei zurückgefahrener Stellung der Hohlnadel die Durchgangsöffnung abgesperrt ist.

Das Heißläufersystem für den Werkstoff "A" ist konventionell aufgebaut und für sich temperaturregelbar. Für das Barrierematerial, den Werkstoff "B", dient das Heißläufersystem lediglich der Befüllung der Hohlnadelspeicher. Dieses Heißläufersystem wird durch eine an dem Formwerkzeug angebrachte Plastifiziereinheit mit Werkstoff "B" versorgt. Diese vorteilhafte Lösung läßt sich aufgrund der geringen Menge an Werkstoff "B" verwirklichen.

Das Heißläufersystem für den Werkstoff "B" benötigt keine rheologische Balanzierung, weil das Befüllen des Hohlnadelspeichers nach einem vorgegebenen Druck nach dem Gesetz der kommunizierenden Röhren erfolgt, d. h., nach einer bestimmten Zeit weisen alle Hohlnadelspeicher den gleichen Füllgrad auf.

Die Merkmale weiterer Ausgestaltungen der erfindungsgemäßen Vorrichtung sind in den Unteransprüchen 10 bis 18 genannt.

In der Zeichnung sind mehrere Ausgestaltungsmöglichkeiten des erfindungsgemäßen Verfahrens und der Vorrichtung für die Durchführung des Verfahrens schematisch dargestellt. Es zeigen:
- Fig. 1: die jeweiligen Stellungen der Bestandteile einer Düse bei den einzelnen Verfahrensschritten eines ersten Einspritzprinzips;
- Fig. 2: den Druckverlauf in der Düsenvorkammer beim Ablauf des ersten Einspritzprinzips;
- Fig. 3: die jeweiligen Stellungen der Bestandteile einer Düse bei den einzelnen Verfahrensschrltten eines zweiten Einspritzprinzips;
- Fig. 4: den Druckverlauf in der Düsenvorkammer beim Ablauf des zweiten Einspritzprinzips;
- Fig. 5: ein Formwerkzeug in Draufsicht, teilweise im Querschnitt;
- Fig. 6: die düsenseitige Hälfte des in Fig. 5 dargestellten Formwerkzeugs in Frontansicht, gesehen in Richtung des Pfeiles VI in Fig. 5 .

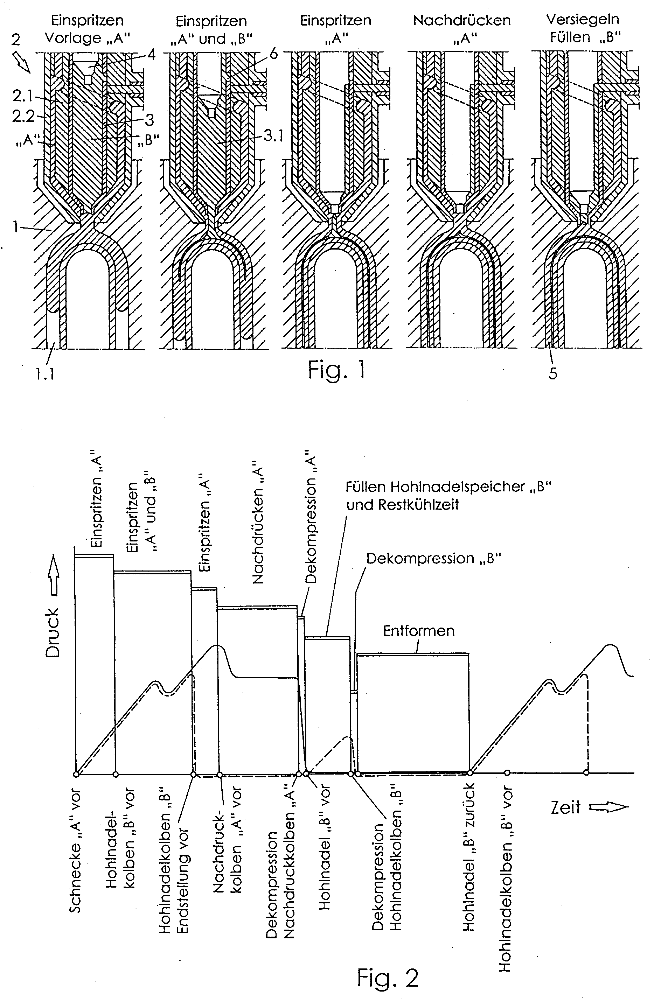

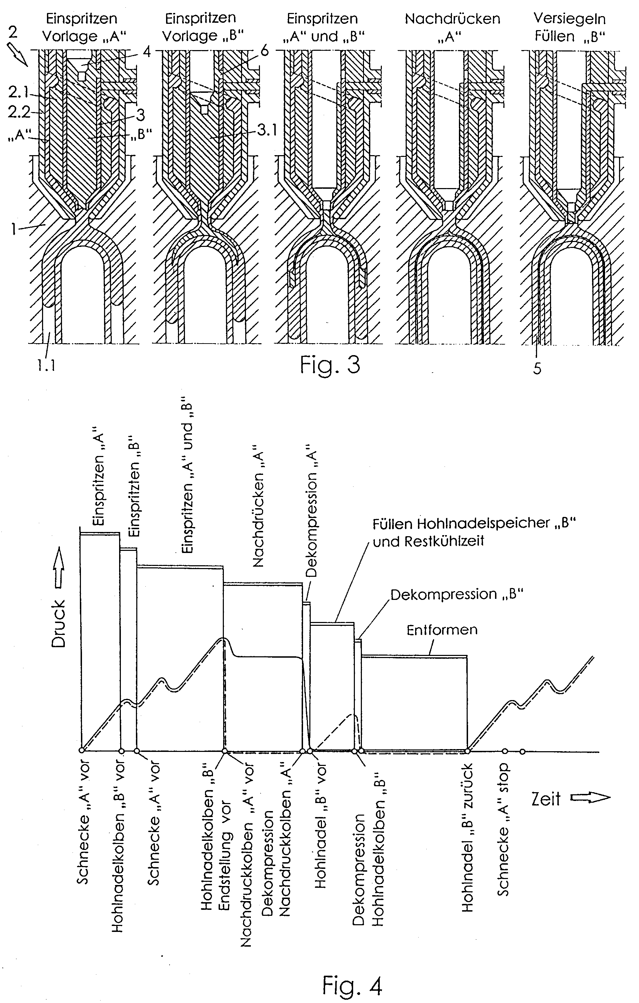

Die in den Fig. 1 und 3 dargestellten Ausführungsbeispiele zeigen jeweils ein Formwerkzeug 1 mit Formkavitäten 1.1 und eine Spritzgießdüse 2, wobei die Spritzgießdüse 2 aus einem Düseninnenkörper 2.1 und einem Düsenaußenkörper 2.2 besteht und wobei in dem Düseninnenkörper 2.1 eine Hohlnadel 3 mit integriertem Hohlnadelkolben 4 verschiebbar angeordnet ist. Bei zurückgefahrenem Hohlnadelkolben 4 bildet sich in der Hohlnadel 3 ein Hohlnadelspeicher 3.1. In den Formkavitäten 1.1 des Formwerkzeugs 1 befinden sich nach Ablauf des Verfahrens die Spritzlinge 5.

Bei den in den Fig. 1 und 3 dargestellten Ausführungsbeispielen wird der Werkstoff "A" bei zurückgefahrener Hohlnadel 3 und bei zurückgefahrenem Hohlnadelkolben 4 durch den Ringspalt zwischen dem Düseninnenkörper 2.1 und dem Düsenaußenkörper 2.2 hindurch den in dem Formwerkzeug 1 befindlichen Formkavitäten 1.1 zugeführt. Die Zuführung des Werkstoff "B" erfolgt durch die Hohlnadel 3 hindurch.

Die Fig. 1 und 2 beziehen sich auf den Verfahrensablauf gemäß Patentanspruch 2 und die Fig. 3 und 4 auf den Verfahrensablauf gemäß Patentanspruch 3.

Die in den Fig. 1 und 3 dargestellten Verfahrensabläufe sind wegen der in der Zeichnung eingetragenen Beschriftungen auch ohne bis ins einzelne gehende Erläuterung nachzuvollziehen. Ebenso die in den Fig. 2 und 4 dargestellten Druckverläufe. Bei den in den Fig. 2 und 4 dargestellten Druckverläufen ist der sich auf den Werkstoff "A" beziehende Druckverlauf mit einer Vollinie und der sich auf den Werkstoff "B" beziehende Druckverlauf mit einer gestrichelten Linie angedeutet.

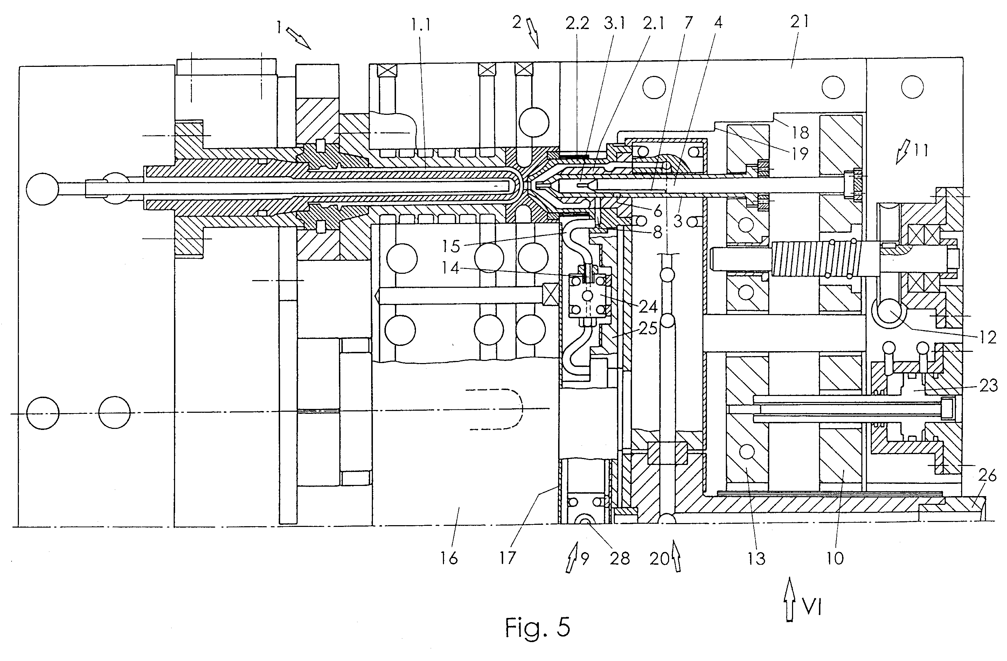

Das in Fig. 5 dargestellte Formwerkzeug 1 ist mit Formkavitäten 1.1 versehen, denen über die Spritzgießdüsen 2 die Werkstoffe "A" und "B" (vgl. Fig. 1 und 3) zugeführt werden. Die Spritzgießdüsen 2 sind jeweils aus einem Düseninnenkörper 2.1 und einem Düsenaußenkörper 2.2 gebildet. In dem Düseninnenkörper 2.1 ist eine Hohlnadel 3 mit einem nicht drehbaren Hohlnadelkolben 4 angeordnet. Die Hohlnadel 3 ist mit einer Durchgangsöffnung 6 versehen, die in der dargestellten Stellung verschlossen ist. Die Durchgangsöffnung 6 befindet sich im Bereich einer in dem Hohlnadelkolben 4 vorgesehenen Längsnut 7 und stellt - zusammen mit der Längsnut 7 - eine Verbindung zwischen einer Zuführungsleitung 8 für den Werkstoff "B" und dem Hohlnadelspeicher 3.1 dar.

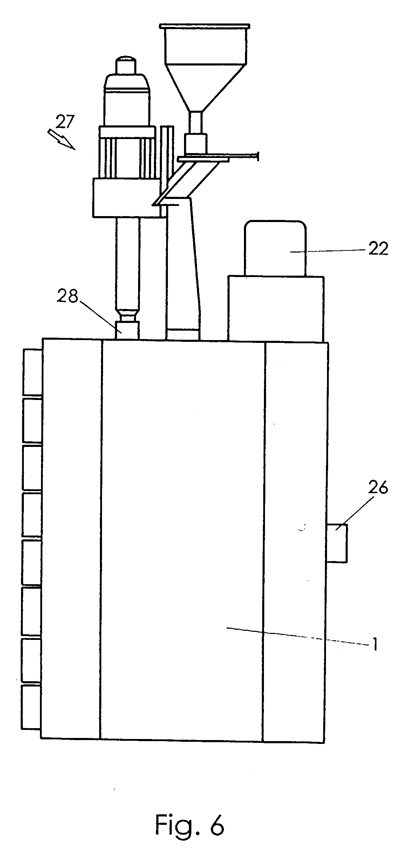

Die Spritzgießdüsen 2 sind in einer Heißläuferplatte 21 gehalten. Die der Spritzgießdüse 2 abgewandten Enden jedes Kohlnadelkolbens 4 sind an einer Trägerplatte 10 befestigt. Die Trägerplatte 10 kann, betätigt durch Schnecken-Kugelgewindetriebwerke 11, dessen Antriebsschnecken 12 mit einem geregelten Drehstrom-Servomotor 22 in Verbindung stehen (vgl. Fig. 6), Hubbewegungen ausführen. Dadurch wird ein regelbares Füllen der Hohlnadelspeicher 3.1 mit Werkstoff "B" sowie das Abfahren von exakten Einspritzprofilen mit dem Barrierematerial, dem Werkstoff "B", erreicht. Dies betrifft sowohl die sequenziellen als auch die simultanen Einspritzphasen.

Ermöglicht wird dies durch die technische Charakteristik des geregelten Drehstrom-Servomotors, und zwar
- konstantes Drehmoment über den gesamten Drehzahlbereich,
- hohe Dynamik (von 0 auf Nenndrehzahl in 25 ms),
- Verschleißfreiheit,
- hohe Überlastungsfähigkeit,
- Nenndrehmoment auch in der Beschleunigungs- und Bremsphase vorhanden.
- hohe Drehzalkonstanz bei Nenndrehzahlen von 2000 bis 8000 min⁻¹,
- kleine Abmessungen bei hohen Leistungen.

Über Lage- und Drehzahlregler lassen sich vorgegebene Master-Einspritzprofile von Zyklus zu Zyklus exakt reproduzierbar verwirklichen.

Die Hohlnadeln 3 sind in einer gemeinsamen Trägerplatte 13 befestigt. Die Trägerplatten 10 und 13 können unabhängig voneinander Hubbewegungen ausführen. Hierbei wird die Trägerplatte 10 von den vorstehend erwähnten Schnecken-Kugelgewindetriebwerken 11 betätigt, während für die Betätigung der Trägerplatte 13 Hydraulikzylinder 23 vorgesehen sind.

Die Zuführung des Werkstoffs "B" erfolgt über Rohre 14, die mit Abstand von einem Reflektorrohr 15 umgeben sind und in Verbindung zum Schmelzeverteiler 24 stehen.

Um eine thermische Trennung des Heißläufersystems 9 für den Werkstoff "B" von dem Heißläufersystem 20 für den Werkstoff "A" zu bewirken, ist zwischen diesen beiden Systemen eine Zwischenwand 25 angeordnet.

In dem Formwerkzeug 1 sind ferner Anschläge 18 und 19 für die Null- bzw. die Tiefstellungen der Trägerplatten 10 und 13 vorgesehen.

Wie aus Fig. 6 zu ersehen ist, erfolgt die Zuführung des Werkstoffs "A" in das Heißläufersystem 20 (vgl. Fig. 5) in konventioneller Weise von der - nicht dargestellten - Maschinendüse über eine Angußbüchse 26, während der Werkstoff "B" dem Heißläufersystem 9 (vgl. Fig. 5) aus der an dem Formwerkzeug 1 angebrachten Plastifiziereinheit 27 über eine Angußbüchse 28 zugeführt wird.

### Bezugszeichen

- 1: Formwerkzeug
- 1.1: Formkavität
- 2: Spritzgießdüse
- 2.1: Düseninnenkörper
- 2.2: Düsenaußenkörper
- 3: Hohlnadel
- 3.1: Hohlnadelspeicher
- 4: Hohlnadelkolben
- 5: Spritzling
- 6: Durchgangsöffnung (in 3)
- 7: Längsnut (in 4)
- 8: Zuführungsleitung (Werkstoff "B")
- 9: Heißläufsystem (Werkstoff "B")
- 10: Trägerplatte (für 4)
- 11: Schnecken-Kugelgewindetriebwerk
- 12: Antriebsschnecke (von 11 zum Servomotor)
- 13: Trägerplatte (für 3)
- 14: Rohre (Werkstoff "B")
- 15: Reflektorrohr (um 14)
- 16: Matrizenplatte
- 17: Reflektorblech (zwischen 9 und 16)
- 18: Anschlag (für 10)
- 19: Anschlag (für 13)
- 20: Heißläufsystem (Werkstoff "A")
- 21: Heißläuferplatte
- 22: Drehstrom-Servomotor
- 23: Hydraulikzylinder
- 24: Schmelzeverteiler (Werkstoff "B")
- 25: Zwischenwand (zwischen 9 und 20)
- 26: Angußbüchse (für Werkstoff "A")
- 27: Plastifiziereinheit (für Werkstoff "B")
- 28: Angußbüchse (für Werkstoff "B")

## Patentansprüche

1. Verfahren zum Spritzgießen von dreischichtigen Spritzlingen, insbesondere von Flaschenvorformlingen, mit einer inneren und einer äußeren Schicht aus einem Werkstoff "A", beispielsweise PET (Polyethylenterephthalat) und einer mittleren Schicht aus einem Werkstoff "B", der als Gasbarriere für O₂, CO₂ und SO₂ sowie Wasserdampf (H₂O) geeignet ist, beispielsweise EVAL (Ethylene Vinyl Alcohol Copolymer), mittels einer Vorrichtung, die mindestens ein Formwerkzeug mit mehreren Formkavitäten und mindestens eine mit Spritzgießdüsen versehene Heißläuferplatte aufweist, wobei die Anzahl der Spritzgießdüsen der Anzahl der Formkavitäten entspricht, und wobei die Werkstoffe "A" und "B" über separate Heißläufersysteme den Formkavitäten zugeführt werden,
**dadurch gekennzeichnet,**
1.1 daß die Zuführung des Werkstoffs "A" in die Formkavitäten (1.1) des Formwerkzeugs (1) über einen Ringspalt zwischen dem Düseninnenkörper (2.1) und dem Düsenaußenkörper (2.2) jeder Spritzgießdüse (2) und die Zuführung des Werkstoffs "B" in die Formkavitäten (1.1) über eine zentral in dem Düseninnenkörper (2.1) angeordnete Hohlnadel (3) mit einem integrierten nicht drehbaren Hohlnadelkolben (4) erfolgt
1.2 und daß die Befüllung des in der Hohlnadel (3) gebildeten Hohlnadelspeichers (3.1) in vorgefahrener Stellung - der Schließstellung - durch eine in der Hohlnadel (3) vorgesehene, senkrecht zu der Hohlnadel (3) verlaufende Durchgangsöffnung (6) erfolgt, während in zurückgefahrener Stellung der Hohlnadel (3) die Durchgangsöffnung (6) abgesperrt ist.

2. Verfahren nach Anspruch 1, dadurch gekennzeichnet,
2.1 daß - bei zurückgefahrener Hohlnadel (3) und dadurch verschlossener Durchgangsöffnung (6) und bei zurückgefahrenem Hohlnadelkolben (4) - durch den Ringspalt zwischen dem Düseninnenkörper (2.1) und dem Düsenaußenkörper (2.2) hindurch die Zuführung eines eine Vorlage bildenden Teils des Werkstoffs "A" erfolgt,
2.2 daß danach - bei unveränderter Stellung der Hohlnadel (3) und bei Vorfahren des Hohlnadelkolbens (4) - eine weitere Zuführung des Werkstoffs "A" und eine gleichzeitige Zuführung des Werkstoffs "B" erfolgt,
2.3 daß sodann - bei nunmehr in vorgefahrener Stellung befindlichem Hohlnadelkolben (4) und somit von Werkstoff "B" entleertem Hohlnadelspeicher (3.1) - zunächst ein weiteres Einspritzen des Werkstoffs "A" und
2.4 anschließend ein Nachdrücken des Werkstoffs "A" mit einer nachfolgenden Dekomprimierung des Werkstoffs "A" durchgeführt wird,
2.5 daß schließlich die Hohlnadel (3) bis zur Berührung mit dem Düsenaußenkörper (2.2) vorgefahren, der Anguß versiegelt und der Hohlnadelkolben (4) zurückgefahren wird, wobei ein Füllen des Hohlnadelspeichers (4) mit Werkstoff "B" erfolgt
2.6 und daß zuletzt eine Dekomprimierung des Werkstoffs "B" und anschließend die Entformung der Spritzlinge (5) durchgeführt wird.

3. Verfahren nach Anspruch 1, dadurch gekennzeichnet,
3.1 daß - bei zurückgefahrener Hohlnadel (3) und dadurch verschlossener Durchgangsöffnung (6) und bei zurückgefahrenem Hohlnadelkolben (4) - durch den Ringspalt zwischen dem Düseninnenkörper (2.1) und dem Düsenaußenkörper (2.2) hindurch die Zuführung eines eine Vorlage bildenden Teils des Werkstoffs "A" erfolgt,
3.2 daß danach - bei unveränderter Stellung der Hohlnadel (3) und bei Vorfahren des Hohlnadelkolbens (4) - die Zuführung eines eine Vorlage bildenden Teils des Werkstoffs "B" aus dem Hohlnadelspeicher (3.1) erfolgt,
3.3 daß sodann - bei weiterhin unveränderter Stellung der Hohlnadel (3) und weiterem Vorfahren des Hohlnadelkolbens (4) bis zur Berührung mit dem Austrittstrichter der Hohlnadel (3) - eine gleichzeitige Zuführung der Werkstoffe "A" und "B" erfolgt,
3.4 daß anschließend ein Nachdrücken des Werkstoffs "A" mit einer nachfolgenden Dekomprimierung des Werkstoffs "A" durchgeführt wird,
3.5 daß schließlich die Hohlnadel (3) bis zur Berührung mit dem Düsenaußenkörper (2.2) vorgeschoben, der Anguß versiegelt und der Hohlnadelkolben (4) zurückgefahren wird, wobei ein Füllen des Hohlnadelspeichers (3.1) mit Werkstoff "B" erfolgt,
3.6 und daß zuletzt eine Dekomprimierung des Werkstoffs "B" und anschließend die Entformung der Spritzlinge (5) durchgeführt wird.

4. Verfahren nach Anspruch 1, 2 oder 3, dadurch gekennzeichnet, daß die Hohlnadel (3) und der Hohlnadelkolben (4) nach Entleerung des Wrrkstoffs "B" gleichzeitig synchron in Versiegelungsstellung vorgefahren werden.

5. Verfahren nach einem der Ansprüche 1 bis 4, dadurch gekennzeichnet, daß nach dem Befüllen des Hohlnadelspeichers (3.1) kurz vor Werkzeugöffnungsbeginn eine Dekompression des Hohlnadelspeichers (3.1) durch geringfügiges Zurückfahren des Hohlnadelkolbens (4) durchgeführt wird.

6. Verfahren nach einem der Ansprüche 1 bis 5, dadurch gekennzeichnet, daß die in jeden Hohlnadelspeicher (3.1) einzufüllende Menge des Werkstoffs "B" durch einen vorgegebenen Hub jedes Hohlnadelkolbens (4) bzw. einer die Hohlnadelkolben (4) tragenden Trägerplatte (10) bestimmt ist, wobei jeder Hohlnadelkolben (4) bzw. die Trägerplatte (10) durch ein Schnecken-Kugelgewindetriebwerk (11) betätigt wird, dessen Antriebsschnecke (12) mit einem geregelten Drehstrom-Servomotors (22) in Verbindung steht.

7. Verfahren nach Anspruch 6, dadurch gekennzeichnet, daß das Volumen des Hohlnadelspeicher (3.1) bzw. die in den Hohlnadelspeicher (3.1) einzufüllende Menge des Werkstoffs "B" so bemessen wird, daß die Wanddicke des Werkstoffs "B" beim unverstreckten Spritzling (5) etwa 0,10 bis 0,20 mm und beim fertigen Formling, beispielsweise bei der fertigen Flasche, etwa 10 bis 20 µm beträgt.

8. Verfahren nach Anspruch 6, dadurch gekennzeichnet, daß die in den Hohlnadelspeicher (3.1) einzufüllende Menge des Werkstoffs "B" so bemessen wird, daß der Gewichtsanteil des Werkstoffs "B" 1,5 bis 3 % des Gesamtgewichts des Spritzlings (5) beträgt.

9. Vorrichtung für die Durchführung des Verfahrens nach einem der Ansprüche 1 bis 8, die mindestens ein Formwerkzeug (1) mit mehreren Formkavitäten (1,1) und mindestens eine mit Spritzgießdüsen (2) versehene Heißläuferplatte (21) aufweist, wobei die Anzahl der Spritzgießdüsen (2) der Anzahl der Formkavitäten (1.1) entspricht und wobei in jeder Spritzgießdüse (2) eine Verschlußnadel verschiebbar angeordnet ist,
dadurch gekennzeichnet,
9.1 daß die Verschlußnadel als Hohlnadel (3) mit darin verschiebbar angeordnetem, nicht drehbarem Hohlnadelkolben (4) ausgebildet ist, wobei der Innenraum der Hohlnadel (3) einen Speicher (Hohlnadelspeicher 3.1) für den Werkstoff "B" bildet,
9.2 daß die Hohlnadel (3) im Bereich des Heißläufersystems (9) für den Werkstoff "B" mit einer senkrecht zu der Hohlnadel (3) verlaufenden Durchgangsöffnung (6) und der Hohlnadelkolben (4) mit einer sich bis zu der Durchgangsöffnung (6) erstreckenden Längsnut (7) versehen ist, wobei die Durchgangsöffnung (6) und die Längsnut (7) einen Durchfluß des Werkstoffs "B" von einer Zuführungsleitung (8) in den Hohlnadelspeicher (3.1) ermöglichen,
9.3 und daß die Durchgangsöffnung (6) derart angeordnet ist, daß ein Befüllen der Hohlnadel (3) nur in vorgefahrener Stellung - der Schließstellung der Hohlnadel (3) - erfolgen kann und daß bei zurückgefahrener Stellung der Hohlnadel (3) die Durchgangsöffnung (6) abgesperrt ist.

10. Vorrichtung nach Anspruch 9, dadurch gekennzeichnet, daß sämtliche Hohlnadeln (3) und sämtliche Hohlnadelkolben (4) jeweils in einer gemeinsamen Trägerplatte (10, 13) befestigt sind, wobei die beiden Trägerplatten (10, 13) unabhängig voneinander Hubbewegungen ausführen können.

11. Vorrichtung nach Anspruch 10, dadurch gekennzeichnet, daß die beiden Trägerplatten (10, 13) eine rechteckige Form aufweisen und an ihren vier äußeren Ecken innerhalb des Formwerkzeugs (1) geführt sind.

12. Vorrichtung nach Anspruch 10 oder 11, dadurch gekennzeichnet, daß für die Betätigung der die Hohlnadeln (3) tragenden Trägerplatte (13) mindestens ein Hydraulikzylinder (23) vorgesehen ist.

13. Vorrichtung nach Anspruch 11 oder 12, dadurch gekennzeichnet, daß für die Betätigung der Hohlnadelkolben (4) bzw. der die Hohlnadelkolben (4) tragenden Trägerplatte (10) Schnecken-Kugelgewindetriebwerke (11) vorgesehen sind, dessen Antriebsschnecke (12) mit einem geregelten Drehstrom-Servomotor in Verbindung steht.

14. Vorrichtung nach einem der Ansprüche 9 bis 13, dadurch gekennzeichnet, daß für die Zuführung des Werkstoffs "B" vom Schmelzeverteiler (24) in die Spritzgießdüsen (2) gebogene Rohre (14) aus einem hochwärmeleitfähigen Werkstoff, vorzugsweise Kupfer, vorgesehen sind, die gleichzeitig als Wärmeausdehnungskompensatoren wirken.

15. Vorrichtung nach Anspruch 14, dadurch gekennzeichnet, daß jedes Rohr (14) für die Zuführung des Werkstoffs "B" in die Düsen (2) mit Abstand von einem Reflektorrohr (15) aus Aluminium umgeben ist.

16. Vorrichtung nach einem der Ansprüche 9 bis 15, dadurch gekennzeichnet, daß das Heißläufersystem (9) für den Werkstoff "B" durch eine Zwischenwand (25) thermisch von dem Heißläufersystem (20) für den Werkstoff "A" getrennt ist.

17. Vorrichtung nach einem der Ansprüche 9 bis 16, dadurch gekennzeichnet, daß zwischen dem Heißläufersystem (9) und der Matrizenplatte (16) ein Reflektorblech (17) angeordnet ist.

18. Vorrichtung nach einem der Ansprüche 9 bis 17, dadurch gekennzeichnet, daß in dem Formwerkzeug (1) Anschläge (18, 19) für die Null- bzw. Tiefstellungen der beiden Trägerplatten (10, 13) vorgesehen sind.
